## Europäisches Patentamt
## European Patent Office
## Office européen des brevets

(19)

(11) Publication number: **0 027 691**
**B1**

(12) **EUROPEAN PATENT SPECIFICATION**

(45) Date of publication of patent specification: **12.10.83**

(21) Application number: **80303402.4**

(22) Date of filing: **26.09.80**

(51) Int. Cl.³: **C 08 F 14/06**, C 08 F 2/18,
**C 23 F 15/00**

(54) **Vinyl chloride polymerisation process.**

(30) Priority: **18.10.79 GB 7936156**

(43) Date of publication of application:
**29.04.81 Bulletin 81/17**

(45) Publication of the grant of the patent:
**12.10.83 Bulletin 83/41**

(84) Designated Contracting States:
**AT BE DE FR GB IT**

(56) References cited:
**GB - A - 1 439 339**

**CHEMICAL ABSTRACTS, vol. 92, 1980, page
49, no. 23496e Columbus, Ohio, U.S.A.**

(73) Proprietor: **IMPERIAL CHEMICAL INDUSTRIES
PLC**
**Imperial Chemical House Millbank**
**London SW1P 3JF (GB)**

(72) Inventor: **Lovelock, Victor Gordon**
**31 Westly Wood**
**Welwyn Garden City Hertfordshire (GB)**
Inventor: **Walker, Robert William**
**8 Alexandra Road Hornsey**
**London N8 (GB)**

(74) Representative: **Sheller, Alan (GB) et al,
Imperial Chemical Industries PLC Legal
Department: Patents Thames House North,
Millbank
GB-London SW1P 4QG (GB)**

Courier Press, Leamington Spa, England.

# Vinyl chloride polymerisation process

The present invention relates to a process for the polymerisation of vinyl chloride in aqueous suspension.

When vinyl chloride is homo- or copolymerised in aqueous suspension in a reactor it is well known that a problem arises in that surfaces inside the reactor become coated with tenaciously adhering polymeric material known as build-up. The formation of tenaciously adhering build-up is undesirable from the point of view of achieving efficient heat transfer for cooling and heating the reactor contents, effective usage of monomer, effective control and monitoring of the polymerisation reaction, and acceptable polymer quality (in view of contamination by dislodged particles of the build-up).

Because of the problems in respect of heat transfer, polymerisation control and polymer quality, it is necessary to clean the reactor between each polymerisation cycle wherein the deposited material is removed as completely as possible, e.g. by scraping or chipping by hand, solvent cleaning or pressure-washing. This is wasteful in terms of the expense of the equipment and manpower required to carry out such cleaning and also in terms of the loss of productivity for a given reactor arising from the time taken to effect the cleaning operation. Hand cleaning is additionally undesirable in that it may constitute a health hazard to the cleaner in view of the harmful properties of vinyl chloride. Indeed, opening up the reactor between polymerisation cycles for cleaning is itself undesirable in this respect since it releases residual vinyl chloride in the reactor to the surrounding atmosphere.

It has been proposed in British Patent 1 439 339 to coat the internal surfaces of a reactor used for vinyl chloride polymerisation in aqueous suspension using a dialkyl peroxydicarbonate as initiator with, inter alia, a cross-linked product formed by reacting formaldehyde and a phenol in an equimolar ratio in order to prevent or reduce the formation of build-up therein without reducing the polymerisation rate. However, according to Japanese Patent Publication 54—107991, the coating product described in British Patent 1 439 339 is not very effective in preventing build-up, apparently because the phenol/formaldehyde condensate is highly cross-linked. In British Patent 1 439 339, the exemplified phenol/formaldehyde condensate is prepared using a reaction sequence which employs, inter alia, an acid-catalysed condensation between phenol and formaldehyde and which involves heating the polymeric material applied to the reactor surface at an elevated temperature before charging the polymerisation ingredients.

In Japanese Patent Publication 54—107991 an improvement over the technique described in British Patent 1 439 339 is proposed whereby the build-up suppressant applied to the reactor internal surfaces is an early-stage phenol/formaldehyde condensate. The preferred early-stage condensate is a resol, obtained using an alkaline catalyst, and conveniently applied as a basic aqueous solution. After applying the solution of the early-stage condensate, it is preferable to rinse the coated surface with water or with dilute acid (pH <6). There is no limitation mentioned concerning the polymerisation initiator and those exemplified are t-butyl peroxypivalate, 2,2'-azobis-2,4-dimethylvaleronitrile and lauroyl peroxide.

It is said in Japanese Patent Publication 54—107991 that the resol employed is prepared using an excess of formaldehyde relative to the phenol and all the Examples according to the claimed invention use a molar ratio of phenol/formaldehyde of 1/1.6. We have discovered, however, that in the case of vinyl chloride polymerisation in aqueous suspension using a dialkyl peroxydicarbonate as initiator, a molar ratio such as that described in Japanese Patent Publication 54—107991 does not result in effective build-up suppression. Indeed, we have found that when carrying out vinyl chloride polymerisation in aqueous suspension using a dialkyl peroxidicarbonate as initiator, it is necessary to contain the molar ratio of phenol to formaldehyde within a certain narrow range if effective build-up suppression without retardation of the polymerisation reaction is to be achieved.

According to the present invention there is provided a process for the polymerisation of vinyl chloride in aqueous suspension using a free radical-yielding initiator wherein the polymerisation is carried out in a polymerisation reactor having adherently deposited on internal surfaces thereof a build-up suppressant coating which has been formed, prior to charging the ingredients for the polymerisation, by 1) applying a basic aqueous solution of a resol, which resol is made by condensing a phenol and formaldehyde in a base-catalysted reaction, to the reactor internal surfaces and 2) insolubilising the resol by applying water or an acid to the basic solution on the internal surfaces, characterised in that the molar ratio between the phenol and formaldehyde used in the preparation of the resol is within the range 1.0/1.1 to 1.1/1.0 and in that the polymerisation is effected using as initiator a dialkyl peroxydicarbonate whose alkyl radicals contain up to 20 carbon atoms.

The resol used for the preparation of the coating should be prepared by condensing the phenol and formaldehyde in the presence of a base. The use of an acid catalyst will yield a novolak product; in our experience such products are usually difficult to prepare and handle and so are not used for the process of the present invention.

The ratio between the phenol and formaldehyde should be within the range 1.0/1.1 to 1.1/1.0. The use of a smaller amount of phenol than that required to give a phenol/formaldehyde ratio of 1.0/1.1

2

incurs the production of a coating with reduced build-up suppressant activity. The use of a larger amount of phenol than that required to give a phenol/formaldehyde ratio of 1.1/1.0 incurs the production of a coating which unacceptably inhibits the vinyl chloride polymerisation reaction.

The coating of the invention is prepared by first preparing a basic solution of the resol, which will normally be the direct or diluted product from the base-catalysed reaction to form the resol (the basic catalyst being e.g. aq. KOH, aq. NaOH, aq. ammonia, or an amine), applying this solution to internal surfaces of the reactor (e.g. by spraying, painting or flooding) and then applying water or a dilute aqueous acid to the basic solution (e.g. by spraying or flooding) to insolubilise the resol. It is our belief that the action of water or dilute acid causes a degree of cross-linking in the resol thereby rendering the phenol/formaldehyde condensate insoluble. However the text of Japanese Patent Publication 54—107991 implies that significant cross-linking only occurs if the resol applied to the reactor surface is heated at an elevated temperature and that this extensive cross-linking destroys the build-up suppressant activity of the applied coating.

Many basic resol solutions are quite stable unless treated under cross-linking conditions and may be stored for a long period of time (e.g. several months) without significant deterioration; others however may cross-link quickly and may have a short shelf-life (which may however be prolonged e.g. by storage at a low temperature and/or by the presence of a suitable stabiliser system).

By the term "phenol" in this specification is meant monohydric and polyhydric phenols such as phenol itself, catechol, hydroquinone, resorcinol, chlororesorcinol, the isomeric hydroxy benzoic acids, the isomeric dihydroxy toluenes and xylenes, the isomeric ethyl, propyl, butyl and pentyl dihydroxy benzenes, pyrogallol, hydroxyquinol, phloroglucinol, the isomeric trihydroxy toluenes and xylenes and the isomeric ethyl, propyl, butyl and pentyl trihydroxy benzenes.

The coating may be formed on any surface inside the reactor which is liable to suffer the formation of build-up thereon. For example, it may be formed on the interior surface of the main body of the reactor, and on the interior surface of the roof of the reactor which is often above the liquid level of the polymerisation medium and usually suffers tenacious build-up thereon. If a condenser is installed in a part of the reactor that is in contact with the gaseous phase during polymerisation or if it is installed outside the reactor and connected thereto by conduit piping, the condenser and conduit piping may be similarly coated.

It is to be appreciated that for the best results, a surface to be coated should be as clean and as smooth as possible to begin with. If the surface is of somewhat dubious quality in this respect, it may be advisable to coat it with two or more successively applied layers of the coating.

The coating may be formed on a surface in combination with one or more other materials, e.g. materials which also have a suppressing effect on polymerisation build-up.

A reactor having coated internal surfaces according to the invention may be used for the polymerisation of vinyl chloride as defined wherein the formation of build-up is eliminated or very much suppressed without unacceptable retardation of the polymerisation reaction. The polymerisation reaction may if desired be carried out in the presence of a basic substance such as $NaHCO_3$ or a suitable buffering system to ensure an adequately high pH for the reaction medium (e.g. pH $>4$) as such an expedient can further enhance the build-up suppressant effect of the coating product.

By "polymerisation of vinyl chloride" is meant both homopolymerisation of vinyl chloride and copolymerisation with one or more comonomers copolymerisable therewith. Examples of comonomers include vinyl esters such as vinyl acetate, acrylic esters such as methyl acrylate and butyl methacrylate, acrylic nitriles such as acrylonitrile and methacrylonitrile, unsaturated diesters such as diethyl maleate, allyl esters such as allyl acetate, $\alpha$-olefines such as ethylene and propylene, vinyl ethers and styrene compounds. It is preferred to apply the invention to the production of polymers containing at least 50% molar and more particularly at least 80% molar, of units derived from vinyl chloride.

The invention is particularly applicable to the production of vinyl chloride/vinyl acetate copolymers containing 3 to 20% molar of vinyl acetate units, since it is in any case often extremely difficult when using known build-up suppressants to obtain a consistently build-up free process when making such copolymers.

Examples of dialkyl peroxydicarbonates whose alkyl radicals contain up to 20 carbon atoms (the term "alkyl" including "cycloalkyl") which may be used in the present invention include diethyl peroxydicarbonate, diisopropyl peroxydicarbonate, dicetyl peroxydicarbonate, and bis (4-tertiarybutylcyclohexyl) peroxydicarbonate. Diethyl peroxydicarbonate is particularly preferred. The initiator may be used in a conventional quantity in the polymerisation reaction.

The operating conditions for polymerisation according to the present invention may be those customarily used for vinyl chloride polymerisation, the polymerisation temperature generally being between 40 and 75°C and the pressure generally being below 15 kg/cm² ($15.10^5$ N/m²).

The present invention is now illustrated by the following Examples. Unless otherwise specified all parts and percentages are by weight. In all Examples employing a polymerisation reactor, the reactor internal surfaces were thoroughly cleaned before being used as described in any particular Example. The Examples 1—4 and 10—15 show the preparation of resols used in the Examples 5—8 and 16—28. In the Examples 9.2 g and 30 (comparative) no resols were used.

3

## Example 1

A resol for use in the preparation of a build-up suppressant coating according to the invention was produced as follows. Phenol (94 g, as a 92% w/v aqueous solution; 1.0 mole) and formaldehyde (30 g, as a 38% w/v aqueous solution; 1.0 mole) and 4M Na OH aqueous solution (about 18 ml) were placed in a flask fitted with a reflux condenser and a thermometer. The mixture was heated gently to 60—70°C and allowed to boil for several minutes under its own exothemicity; the mixture was then refluxed gently with applied heating for about 30 minutes. The product was a slightly viscous basic solution containing the resol; it had a shelf life of several months.

## Examples 2—4

Resols were prepared using substantially the same procedure as in Example 1 but employing different phenols, viz p-hydroxy benzoic acid (Example 2), resorcinol (Example 3) and 4-chlororesorcinol (Example 4), the molar ratio to formaldelyde in each case again being 1.0/1.0. The reflux time in Example 2 was about 3 hours (the long reflux time being necessary because of the deactivated phenolic ring) while the reaction to form the resol in Examples 3 and 4 was effected by admixture at room temperature (the low temperature being due to the activated ring). The shelf life of the product from Example 2 was several months; the shelf lives of the products from Examples 3 and 4 were about 24 hours, although dilution with further Na OH solution (1:2) increased these to about 2 days, or at least a week if storage was at 0°C.

## Example 5

The internal surfaces made of stainless steel of a polymerisation reactor (capacity about 35 litres) were painted with the basic resol solution of Example 1 and the painted surfaces sprayed with water. The resol rapidly reacted to form an insoluble glaze on the reactor internal surfaces.

A vinyl chloride/vinyl acetate copolymerisation (100 parts vinyl chloride, 11 parts vinyl acetate charged) was carried out in the reactor in aqueous suspension (198 parts water charged) using partially hydrolysed polyvinyl acetate as suspension agent (0.34% based on the weight of vinyl chloride) and diethyl peroxydicarbonate as initiator (0.07% based on the weight of vinyl chloride). The polymerisation temperature was 58°C.

The polymerisation was terminated when the pressure in the reactor had dropped to about half of running pressure by venting and discharging the polymer slurry. The internal surfaces of the reactor were inspected (see Table 1).

## Examples 6—8

The procedure of Example 5 was followed in Examples 6—8 but using the basic resol solutions from Example 2 (in Example 6), Example 3 (in Example 7) and Example 4 (in Example 8).

## Example 9 (comparative)

The procedure of Example 5 was followed except that the application of the resol solution was omitted.

The details of the polymerisations of Examples 5—9, together with the observations regarding build-up, are shown in Table 1.

TABLE 1

| Ex No | Source of Resol | Molar Ratio Phenol to formaldehyde | Initiator | Reaction Time to start of pressure drop hr | Observation of build-up |
|---|---|---|---|---|---|
| 5 | Ex. 1 | 1.0/1.0 | dep* | 4.5 | No build-up |
| 6 | Ex. 2 | 1.0/1.0 | dep* | 4 | Almost no build-up |
| 7 | Ex. 3 | 1.0/1.0 | dep* | 6 | No build-up |
| 8 | Ex. 4 | 1.0/1.0 | dep* | 6 | No build-up |
| 9 | None used | — | dep* | 5 | Significant skin of build-up |

* dep = diethyl peroxydicarbonate

It can be seen from Table 1 that polymerisation according to the process of the invention in Examples 5—8 resulted in excellent suppression of build-up without significant retardation of the polymerisation rate.

Examples 10—13

Resols were prepared from phenol and formaldehyde using substantially the same procedure as in Example 1 except that the amounts of phenol and formaldehyde were adjusted to provide molar ratios of respectively 1.2/1.0 (in Example 10), 1.1/1.0 (in Example 11), 1.0/1.1 (in Example 12), and 1.0/1.6 (in Example 13).

Examples 14 and 15

Resols were prepared from 4-chlororesorcinol and formaldehyde using substantially the same procedure as in Example 4 except that the amounts of 4-chlororesorcinol and formaldehyde were adjusted to provide molar ratios of respectively 1.1/1.0 (in Example 14) and 1.0/1.1 (in Example 15).

Examples 16—21

Vinyl chloride/vinyl acetate copolymerisations were carried out in Examples 16—21 following the procedure of Example 5 but using the basic resol solutions from Example 10 (in comparative Example 16), Example 11 (in Example 17), Example 12 (in Example 18), Example 13 (in comparative Example 19), Example 14 (in Example 20), and Example 15 (in Example 21).

The details of the polymerisations of Examples 16—21, together with the observations regarding build-up, are shown in Table 2.

TABLE 2

| Ex. No | Source of Resol | Molar Ratio Phenol to formaldehde | Initiator | Reaction Time to start of pressure drop hr | Observation of build-up |
|---|---|---|---|---|---|
| 16 | Ex. 10 | 1.2/1.0 | dep* | 8** | No build-up but little polymer produced anyway |
| 17 | Ex. 11 | 1.1/1.0 | dep* | 7 | No build-up |
| 18 | Ex. 12 | 1.0/1.1 | dep* | 4.5 | Mostly no build-up but some patches near reactor top and on stirrer |
| 19 | Ex. 13 | 1.0/1.6 | dep* | 4 | Large patches of build-up all over reactor surfaces |
| 20 | Ex. 14 | 1.1/1.0 | dep* | 7 | No build-up |
| 21 | Ex. 15 | 1.0/1.1 | dep* | 6 | No build-up |

* dep = diethyl peroxydicarbonate.
** No pressure drop was observed after 8 hours at which time the polymerisation was terminated.

It can be seen from Table 2 that a phenol/formaldehyde ratio of 1.0/1.1 is about the limit for effective build-up suppression, while a phenol/formaldehyde ratio of 1.1/1.0 is about the limit for acceptable reaction time. It will be noted from the Examples of Japanese Patent Publication 54—107991 that vinyl chloride homo- and copolymerisations employing a phenol/formaldehyde resol condensate of molar ratio 1.0/1.6 as the coating material and t-butyl peroxypivalate, 2,2'-azobis-2,4-dimethylvaleronitrile and lauroyl peroxide as initiators did not incur significant build-up formation.

Examples 21, 23 (comparative)

Vinyl chloride/vinyl acetate copolymerisations were carried out in Examples 22 and 23 following

5

the procedure of Example 5 except that the copolymerisations employed, as initiator, lauroyl peroxide (0.17% based on the weight of vinyl chloride) in Example 22 and dicetyl peroxydicarbonate (0.10% based on the weight of vinyl chloride) in Example 23, and that both Examples used the basic resol solution from Example 13 (phenol/formaldehyde condensate of molar ratio 1.0/1.6).

Example 24

The procedure of Example 23 was employed (i.e. using dicetyl peroxydicarbonate as the polymerisation initiator) except that the basic resol solution from Example 1 was used (phenol/formaldehyde condensate of molar ratio 1.0/1.0).

The details of the polymerisations of Examples 22—24, together with the observations regarding build-up, are shown in Table 3.

TABLE 3

| Ex. No | Source of Resol | Molar Ratio Phenol to formaldehyde | Initiator | Reaction Time to start of pressure drop hr | Observation of build-up |
|--------|-----------------|------------------------------------|-----------|--------------------------------------------|-------------------------|
| 22 | Ex. 13 | 1.0/1.6 | lauroyl peroxide | 7 | Almost no build-up |
| 23 | Ex. 13 | 1.0/1.6 | dcp* | 8 | Significant skin of build-up |
| 24 | Ex. 13 | 1.0/1.0 | dcp* | 10 | Almost no build-up |

\* dcp = dicetyl peroxydicarbonate

It can be seen from Table 3 that a phenol/formaldehyde molar ratio of 1.0/1.6, when using lauroyl peroxide as initiator (Example 13), resulted in effective build-up suppression (thereby confirming Japanese Patent Publication 54—107991). However a phenol/formaldehyde molar ratio of 1.0/1.6, when using dicetyl peroxydicarbonate as initiator (Example 23), resulted in unacceptable build-up formation. By contrast, the use of a phenol/formaldehyde molar ratio of 1.0/1.0 gave effective build-up suppression.

Examples 25—30

In these Examples vinyl chloride homopolymerisations were carried out in the reactor used for Example 5, the reactor being coated with the resol solution from Example 1 in Examples 26 and 28 and from Example 13 in comparative Examples 25 and 27, with resol coating being omitted in comparative Examples 29 and 30.

The vinyl chloride homopolymerisations employed 100 parts of vinyl chloride, 245 parts of water, partially hydrolysed polyvinyl acetate as suspension agent (0.34% based on the weight of vinyl chloride) and, as initiator, diethyl peroxydicarbonate in Examples 25, 26 and 29 (0.11% based on the weight of vinyl chloride) and dicetyl peroxydicarbonate in Examples 26, 27 and 30 (0.10% based on the weight of vinyl chloride). The polymerisation temperature in each case was 58°C. Each polymerisation was terminated when the pressure in the reactor had dropped to about half of running pressure by venting and discharging the polymer slurry.

The details of the polymerisations of Examples 25—30, together with the observation regarding build-up, as shown in Table 4.

6

# 0 027 691

TABLE 4

| Ex. No | Source of Resol | Molar Ratio Phenol to formaldehyde | Initiator | Reaction Time to start of pressure drop hr | Observation build-up |
|---|---|---|---|---|---|
| 25 | Ex. 13 | 1.0/1.6 | dep* | 4 | Significant skin of build-up |
| 26 | Ex. 1 | 1.0/1.0 | dep* | 4 | No build-up |
| 27 | Ex. 13 | 1.0/1.6 | dcp** | 10 | Significant skin of build-up |
| 28 | Ex. 1 | 1.0/1.0 | dcp** | 9 | No build-up |
| 29 | None used | — | dep* | 4 | Significant skin of build-up |
| 30 | None used | — | dcp** | 9 | Significant skin of build-up |

\* dep = diethyl peroxydicarbonate.
\*\* dcp = dicetyl peroxydicarbonate.

It can be seen that the effect of phenol/formaldehyde molar ratio on build-up suppression when using dialkyl peroxydicarbonate as polymerisation initiator for vinyl chloride homopolymerisation is consistent with that found with vinyl chloride copolymerisation.

## Claims

1. A process for the polymerisation of vinyl chloride in aqueous suspension using a free radical-yielding initiator wherein the polymerisation is carried out in a polymerisation reactor having adherently deposited on internal surfaces thereof a build-up suppressant coating which has been formed, prior to charging the ingredients for the polymerisation, by 1) applying a basic aqueous solution of a resol, which resol is made by condensing a phenol and formaldehyde in a base-catalysted reaction, to the reactor internal surfaces and 2) insolubilising the resol by applying water or an acid to the basic solution on the internal surfaces, characterised in that the molar ratio between the phenol and formaldehyde used in the preparation of the resol is within the range 1.0/1.1 to 1.1/1.0 and in that the polymerisation is effected using as initiator a dialkyl peroxydicarbonate whose alkyl radicals contain up to 20 carbon atoms.

2. A process according to claim 1 characterised in that the polymerisation is a vinyl chloride/vinyl acetate copolymerisation which yields a copolymer containing 3 to 20% molar of vinyl acetate units.

3. A process according to claim 1 characterised in that the polymerisation is a vinyl chloride homopolymerisation.

4. A process according to any one of the preceding claims characterised in that the dialkyl peroxydicarbonate used is selected from diethyl peroxydicarbonate, diisopropyl peroxydicarbonate, dicetyl peroxydicarbonate, and bis (4-tertiarybutylcyclohexyl) peroxydicarbonate.

5. A process according to any one of the preceding claims characterised in that the phenol used in the preparation of the resol is selected from phenol itself, catechol, hydroquinone, resorcinol, chlororesorcinol and the isomeric hydroxybenzoic acids.

6. A process according to any one of the preceding claims characterised in that the basic catalyst used in the preparation of the resol is selected from aq. KOH, aq. NaOH and aq. ammonia.

## Patentansprüche

1. Verfahren zur Polymerisation von Vinylchlorid in wäßriger Suspension unter Einsatz eines freie Radikale liefernden Initiators, wobei die Polymerisation in einem Polymerisations-Reaktionsbehälter durchgeführt wird, auf dessen Innenflächen eine anhaftende Schicht abgeschieden ist, die eine Ansammlung von fest anhaftendem, polymerem Material unterdrückt bzw. verhindert und durch

1) Aufbringen einer basischen, wäßrigen Lösung eines Resols, das durch Kondensation von einem

7

Phenol und Formaldehyd in einer basenkatalysierten Reaktion hergestellt wurde, auf die Innenflächen des Reaktionsbehälters und

2) Unlöslichmachen des Resols durch Aufbringen von Wasser oder einer Säure auf die basische Lösung, die sich auf den Innenflächen befindet,

vor dem Einfüllen der Bestandteile für die Polymerisation gebildet worden ist, dadurch gekennzeichnet, daß das Molverhältnis zwischen dem Phenol und Formaldehyd, die bei der Herstellung des Resols eingesetzt werden, innerhalb des Bereichs von 1,0/1,1 bis 1,1/1,0 liegt und daß die Polymerisation unter Einsatz eines Dialkylperoxydicarbonats, dessen Alkylreste bis zu 20 Kohlenstoffatome enthalten, als Initiator durchgeführt wird.

2. Verfahren nach Anspruch 1, dadurch gekennzeichnet, daß die Polymerisation eine Vinylchlorid/Vinylacetat-Copolymerisation ist, die ein 3 bis 20 Mol-% Vinylacetateinheiten enthaltendes Copolymer ergibt.

3. Verfahren nach Anspruch 1, dadurch gekennzeichnet, daß die Polymerisation eine Vinylchlorid-Homopolymerisation ist.

4. Verfahren nach einem der vorhergehenden Ansprüche, dadurch gekennzeichnet, daß das eingesetzte Dialkylperoxydicarbonat aus Diethylperoxydicarbonat, Diisopropylperoxydicarbonat, Dicetylperoxydicarbonat und Bis(4-t-butylcyclohexyl)peroxydicarbonat ausgewählt ist.

5. Verfahren nach einem der vorhergehenden Ansprüche, dadurch gekennzeichnet, daß das bei der Herstellung des Resols eingesetzte Phenol aus Monohydroxybenzol, Brenzcatechin, Hydrochinon, Resorcin, Chlorresorcin und den isomeren Hydroxybenzosäuren ausgewählt ist.

6. Verfahren nach einem der vorhergehenden Ansprüche, dadurch gekennzeichnet, daß der bei der Herstellung des Resols eingesetzte, basische Katalysator aus wäßrigem KOH, wäßrigem NaOH und wäßrigem Ammoniak ausgewählt ist.

**Revendications**

1. Procédé pour la polymérisation de chlorure de vinyle en suspension aqueuse en utilisant un amorceur fournissant un radical libre, selon lequel la polymérisation est effectuée dans un réacteur de polymérisation sur les surfaces intérieures duquel est déposé, d'une manière réalisant l'adhérence, un revêtement supprimant le dépôt d'encrassement, qui est formé, avant l'introduction des constituants participant à la polymérisation, 1) en appliquant une solution aqueuse basique d'un résol, lequel est produit par condensation d'un phénol et de formaldéhyde au cours d'une réaction catalysée par une base, sur les surfaces intérieures du réacteur, et 2) en insolubilisant le résol par l'application d'eau ou d'un acide sur la solution basique sur les surfaces intérieures, caractérisé en ce que le rapport molaire entre le phénol et le formaldéhyde utilisé dans la préparation du résol est compris dans la gamme allant de 1,0/1,1 à 1,1/1,0, et en ce que la polymérisation est effectuée en utilisant comme amorceur un peroxydicarbonate de dialcoyle dont les radicaux alcoyle contiennent jusqu'à 20 atomes de carbone.

2. Procédé suivant la revendication 1, caractérisé en ce que la polymérisation est une copolymérisation chlorure de vinyle/acétate de vinyle qui fournit un copolymère contenant de 3 à 20 moles % d'unités acétate de vinyle.

3. Procédé suivant la revendication 1, caractérisé en ce que la polymérisation est une homopolymérisation de chlorure de vinyle.

4. Procédé suivant l'une quelconque des revendications précédentes, caractérisé en ce que le peroxydicarbonate de dialcoyle utilisé est choisi parmi les peroxydicarbonate de diéthyle, le peroxydicarbonate de diisopropyle, le peroxydicarbonate de dicétyle et le peroxydicarbonate de bis-(4-t-butylcyclohexyle).

5. Procédé suivant l'une quelconque des revendications précédentes, caractérisé en ce que le phénol utilisé pour la préparation du résol est choisi parmi le phénol lui-même, le catéchol, l'hydroquinone, le résorcinol, le chlororésorcinol et les acides hydroxybenzoîques isomères.

6. Procédé suivant l'une quelconque des revendications précédentes, caractérisé en ce que le catalyseur basique utilisé pour la préparation du résol est choisi parmi le KOH aqueux, le NaOH aqueux et l'ammoniac aqueux.